# EUROPEAN PATENT SPECIFICATION

(11) **EP 1 533 943 B1**
(45) Date of publication and mention of the grant of the patent: **15.10.2008**
(21) Application number: 03026877.5
(22) Date of filing: 24.11.2003
(51) Int. Cl.: H04L 12/28, H04Q 7/38

(54) **System and method for hybrid wireless data communication**
System und Verfahren zur hybriden drahtlosen Datenkommunikation
Système et procédé de communication de données sans fil hybride

(43) Date of publication of application: 25.05.2005
(73) Proprietor: Calypso Wireless, Inc., Miami Lakes, FL 33014 (US)
(72) Inventor: Leon, Robert, Miami, FL 33165 (US)
(74) Representative: Wagner, Karl H.

(56) References cited:
- EP-A- 1 089 578
- WO-A-02/07379
- WO-A-03/039009
- US-A1- 2003 039 242
- US-A1- 2003 067 894

## Description

### BACKGROUND OF THE INVENTION

### Field of the Invention

This invention is directed to a system and method of establishing wireless communication either over the Internet, through an Internet access facility, such as a computer, or alternatively by a compatible over-the-air network, dependent on whether the wireless communication device and the Internet access facility are relatively located inside or outside a preestablished vicinity range. The system includes auto-switching capabilities for determining the route of communication with the wireless communication device dependent, at least in part, on predetermined parameters, which may include the pre-established vicinity range and recognition of a unique identifier associated with at least the wireless communication device.

### DESCRIPTION OF THE RELATED ART

At the present time, it is well recognized that the wireless communication industry is enjoying a period of dramatic growth. Although the number of subscribers is still relatively low, as compared to the maximum capacity available, carriers are offering networks with excellent coverage, lower prices and an increasing variety of additional options. As such, there is a recognized limit to the traditional wireless communications capabilities. As such, even with the recent advancements in wireless communication technology there exists even more opportunity to provide subscribers with vastly improved wireless communication standards.

Additionally, it is recognized that with the increasing popularity of local or global computerized networks, individuals are relying more and more heavily on alternate means of communication and information gathering. Still, however, each of these communications mediums, despite there usefulness, are maintained generally independent from one another, requiring a user to utilize the specified technological medium applicable. Moreover, as the technologies are maintained generally independent from one another, they do not take full advantage of integration possibilities available due to advances in technology. For example, one increasingly popular medium for wireless communication relates to the use of "Bluetooth" technology. Such technology allows short range, wireless communication between devices, thereby providing more versatility and eliminating many cabling limitations/requirements that may limit expansion. Still, however, despite the advantageous nature of such wireless communications protocols, the use of such technology is currently limited to traditional communicative links, replacing a more traditional connectivity solution. As such, the art has failed to truly explore the cross-over potentials available through the expansion of such technology.

Accordingly there is a substantial need in the art for a system and method which enables the integration or cross-over of various generally related technologies so as to substantially increase the versatility and productivity of the communications services offered. Specifically, as will be described within the context of the present invention and has yet been unaddressed in the art, such improved technology could include a hybrid communication system which will operate using standard flex paging protocol in combination with Bluetooth or similar technology for short range messaging. Such an improved hybrid communication system should have the ability to automatically switch to messaging communication with the wireless communication device using, for example, an Internet access facility, such as a personal computer (PC), when two transceivers incorporating the Bluetooth or equivalent technology are within the pre-established vicinity range. Alternatively, such an improved system as provided by the present invention could automatically switch to over-the-air network messaging with the wireless communication device, when outside the pre-established vicinity range, representing substantial savings for both the carriers and the users. In particular, carriers could save money by freeing up limited band width and thereby have the capacity to subscribe more users, while not having to upgrade current infrastructure hardware. Users on the other hand could save money because they would have the ability to send and receive large messages and e-mail wirelessly, when within the aforementioned pre-established vicinity range, at a cost no more than the cost of their current network connection, plus current one-way messaging service.

Further attention is drawn to the document US 2003/067894 A1, which relates to a multi-mode wireless device on a single substrate including an analog portion and a digital portion integrated on the single substrate. The analog portion includes a cellular radio core; and a short-range wireless transceiver core. This arrangement allows for decoding both complex protocols at low data rates (like GPRS), simple protocols at high data rates (like 802.11A) and complex protocols at high data rates (like WCDMA), using the same hardware.

Furthermore attention is drawn to the document US 2003/039242 A1, which relates to methods, systems, and apparatus to enable access to mobile and voice over IP (VoIP) telephone networks with a mobile handset. A VoIP gateway for the VoIP telephone network is provided. A cable modem allows communication between the handset and the VoIP telephone network via the VoIP gateway. A local network connects the handset to the VoIP gateway. The mobile handset determines whether it is within range of the local network. If the handset is within the range of the local network, data traffic may be routed to and from the handset via the VoIP telephone network. If the handset is outside of the range of the local network, data traffic may be routed to and from the handset via the mobile telephone network.

Attention is also drawn to the document WO 03/039009 A, which relates to the following: when a mobile wireless device is within the area of a short range wireless access point, it sends a request for service to be obtained from a network server. The access point receives a response from the server, including a global/local parameter to notify the mobile device whether the requested service is available outside the area of the access point. Regions outside the area of the access point are covered by cellular telephone base stations. If the mobile device detects that it has left the area of the access point while in contact with the server, it will determine whether the parameter indicates that the service is global. If it is global, then the mobile device makes a cellular connection to the server.

### SUMMARY OF THE INVENTION

In accordance with the present invention, a hybrid communication system for wireless data communication, as set forth in claim 1, and a method of hybrid communication utilizing a multi-frequency wireless communication device, as set forth in claim 12, is provided. Further embodiments are claimed in the dependent claims.

This invention is directed to a system and method of hybrid communication which provides data communication including, but not limited to, voice, video and/or alphanumeric messaging, either over the computerized network, such as the Internet, using an appropriate access facility, such as a personal computer, or alternatively by means of an over-the-air network such as, but not limited to, a cellular/paging network, satellite communication and other applicable types of communication networks. The wireless communication device, as set forth above, may include a pager, cellular telephone, personal digital assistant (PDA) or other applicable wireless communication devices structured and designed to perform data communication.

The system and method of the present invention incorporates a transceiver assembly operative on a recognized spread spectrum standard capable of short range communication such as "Bluetooth technology". As is recognized in the communication field, Bluetooth technology incorporates 2.4 GHz wireless data solution utilizing spread spectrum techniques as set forth in detail above. However, as utilized hereinafter the term "transceiver assembly" refers to any type of short range technology operable in the fashion of "Bluetooth technology" but not limited thereto.

More specifically, the hybrid communication system and method of the present invention comprises the utilization of one or more wireless communication devices, of the type set forth above, each having a transceiver connected thereto and operable on a short range radio frequency (RF), wherein each of the plurality of wireless communication devices include a unique identifier or code capable of being recognized by another compatible transceiver, which also defines a part of the aforementioned transceiver assembly. More specifically, a first transceiver designed to function in accordance with Bluetooth or equivalent technology, is connected to an Internet access facility such as, but not limited to, a computer facility or PC. A second transceiver is connected to the wireless communication device. Obviously, the system and method of the present invention contemplates the provision of a plurality of network access facilities or computers and a plurality of wireless communication devices, wherein, for purposes of clarity, each of the aforementioned plurality of computers may be connected to a first transceiver and each of the aforementioned plurality of wireless communication devices may be connected with a second transceiver. The unique identifiers associated with each of the plurality of wireless communication devices are unique onto themselves and serve as an identifying code to any one of the appropriately programed or configured first transceivers associated with different ones of the plurality of computers. Recognition and the establishment of messaging communication may be dependent, at least in part, on at least one predetermined parameter. One such predetermined parameter may be a vicinity range, wherein the first and second transceivers, in order to recognize one another must be within a pre-established vicinity. Currently such a pre-established vicinity range may be generally about 100 meters. However, it is emphasized that the vicinity range is not limited to 100 meters and can vary greatly based at least in part on technological advancements and the specific applications of the present invention. Another possible predetermined parameter may be the unique identifier itself, wherein communication between any one of the plurality of network access facilities or computers must identify and accept the unique identifier or code of the wireless communication device as well as be within the predetermined vicinity range. As set forth above, the vicinity range may be pre-established and determined based on current technological standards and may vary greatly.

The communication system and method of the present invention also incorporates auto-switching capabilities, wherein data communication is automatically established with the access facility when at least one, or both of the aforementioned predetermined parameters (vicinity range and identification) have been established and wherein a first transceiver associated with the Internet access facility and the second transceiver associated with the wireless communication device are configured to recognize and accept one another to establish such communication. Alternatively, the auto-switching capabilities of the present invention establishes data communication by means of a compatible over-the-air network, such as an appropriate paging/cellular network, satellite communication, etc. when either or both of the predetermined parameters between a given access facility and a corresponding wireless communication device are not met. More particularly and also by way of example only, the wireless communication device, when in the acceptable vicinity range of a computer, wherein both incorporate a first and second transceiver as set forth above, can perform data communication over the network, such as the Internet, by means of the computer or other access facility. However, when the wireless communication device is disposed beyond the established vicinity range, the auto-switching capabilities will automatically provide for data communication with the wireless communication device by means of the over-the-air network, as set forth above. The wireless communication device associated with the system and method of the present invention is therefore capable of being operative over at least two distinct frequency ranges, dependent on data communication being established with the computer or Internet access facility or a paging/cellular infrastructure, which may define a compatible over-the-air network.

Other features of the system and method of the present invention comprise the transceiver assembly, whether incorporating Bluetooth technology or its equivalent, including a scanning capability wherein scanning for recognition, preferably of the unique identifier associated with each of the transceivers is conducted and when the aforementioned predetermined parameters, including for example an acceptable vicinity range of 100 meters or other pre-established distance, is met, mutual recognition of the first and second transceivers is accomplished. Such scanning may therefore be referred to as a "find-me-follow-me" procedure which may occur on a substantially continuous basis.

In addition to the above, the communication system and method of the present invention also may include configuration capabilities. This allows messages which would be normally communicated by means of the over-the-air network to be "stored" until communication with a particular one of the plurality of wireless communication devices is established with an appropriate computer incorporating the transceiver assembly technology of the type set forth above. Then, communication is established between the computer and the particular wireless communication device to which the messages were originally sent. Alternatively, the configuration capabilities may allow the selective configuring of the system, such that any stored messages would be transmitted only during a pre-selected time window. Such configuring of course may assume a variety of other data regulating configurations.

One advantage of the hybrid communication system and method of the present invention which may serve as an incentive is the concept of "revenue sharing". More specifically, the system provides the capability of the owner of a computer to decide which wireless communication devices may have access to the network, utilizing his or her computer, assuming that both the computer and any one of the plurality of wireless communication devices are associated with the same piconet of the Bluetooth or equivalent transceiver assembly technology. The system may include security software allowing only wireless devices with "permission" to be able to access the computer's network. As the incentive to open access to others, including strangers, revenue sharing would involve the service provider system giving credit, in the form of money or other incentives, to the owner of the computer which allows access to "stranger" wireless communication devices.

These and other features and advantages of the present invention will become more clear when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawings in which:
Figure 1 is a schematic representation of the hybrid communication system and method of the present invention; and
Figure 2 is a schematic representation in flow chart form of certain operative steps which are representative of and at least partially define the system and method of the present invention.

Like reference numerals refer to like parts throughout the several views of the drawings.

### DETAILED DESCRIPTION OF THE PREFERRED EMBODIMENT

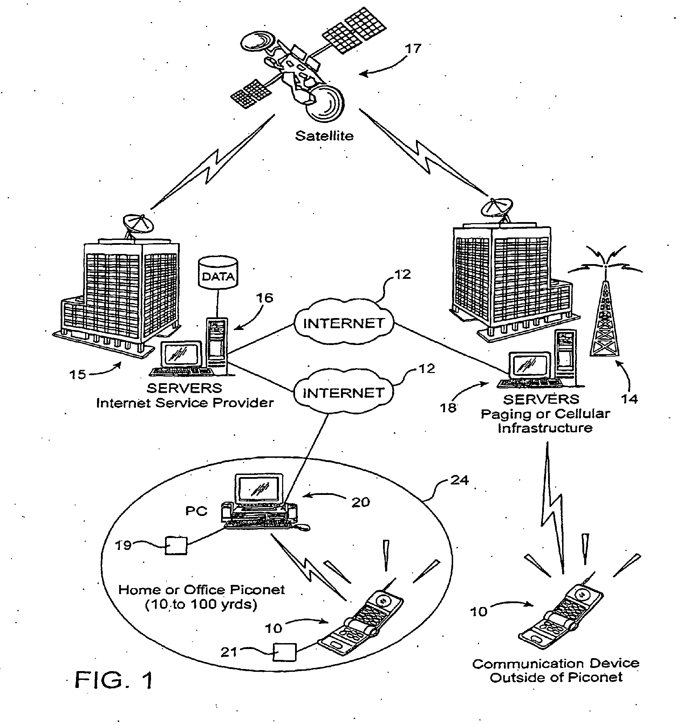

The present invention relates to a system and method of hybrid communication wherein communication is established with any one of a plurality of wireless communication devices, generally indicated as 10 in Figure 1. Such wireless communication devices may of course include a pager assembly, cellular telephone, PDA, etc. More importantly, messaging communication can be established with any of the plurality of wireless communication devices 10 either by means of a global or local computerized network, such as for example, the Internet 12 through an Internet service provider 15 including one or more servers 16, or alternatively by a compatible over-the-air network, generally indicated as 14, also including appropriate servers 18. The over-the-air network can be defined by any compatible paging and/or cellular infrastructure, satellite communication 17 or other appropriate communication facilities, dependent on the type of wireless communication device 10 being utilized and a variety of other related factors.

In one preferred embodiment of the present invention, a transceiver assembly is utilized to provide possible short range wireless communication. By way of example, this transceiver assembly may be in the form of or incorporate Bluetooth technology. Specifically, Bluetooth technology is a used for short range communication between various devices and is the official name of a specification that has become one of the fastest growing technology standards in recent times. Simply put, Bluetooth is a specification for a global wireless technology standard that allows devices to communicate with each other using a secure radio frequency. As such, the use of a Bluetooth transceiver enables at least short range communication without the burden of cables, but at a high rate of data transmission, without line-of-site requirements, typically necessary for infrared technology. In such an embodiment, the transceiver assembly may include at least one small, low power radio transceiver mounted on a chip that communicates with other Bluetoothenabled device. Because it operates on radio frequency (RF) Bluetooth eliminates the need for cables and can connect on a one-to-one or on a one-to-many basis. In addition, at least the illustrated Bluetooth transceiver has the enhanced versatility of supporting voice and video data as well as other data communications, thereby allowing it to be extended into hands-free voice communications. In an embodiment wherein the Bluetooth technology is integrated, it may use a 2.4GHz range, spread spectrum standard radio band, which is un-licensed and available almost worldwide. In addition, the transceiver assembly is preferably capable of transmitting through solid, non-metal objects, enjoying an operative range of generally from 10cm to 10m, which is typically extended to a vicinity range of about 100 meters, by increasing the transmitting power, and is omni directional, supporting both isochronous and asynchronous services.

Also in the illustrated embodiment incorporating the Bluetooth technology, such a transceiver assembly enables a connection and communication wirelessly via short-range, ad hoc networks and can normally support up to eight peripheral devices in a "piconet", which may be defined as two or more Bluetooth or equivalent technology units sharing a common channel. Furthermore, the transceiver assembly may be structured to provide synchronous voice channels which allows the assembly to reserve bandwidth for carrying digital voice data. As such, the system can support three or more simultaneous, full duplex voice conversations within a given piconet.

Also in this embodiment wherein a Bluetooth or similar transceiver is utilized, authentication and encryption is preferably provided in its baseband protocol. For example, the authentication may rely on a challenge/response protocol utilizing a unique identifier (password, PIN, etc.). Two devices communicating with one another within the appropriate or pre-established vicinity range must contain or have recognition of the same unique identifier. This protocol allows each device to authenticate the other, automatically. After the devices are authenticated it is possible to encrypt transmission for added security.

Additionally, it is noted that the Bluetooth and equivalent transceiver assembly technology integrated into the present invention may be designed to carry voice, data and video information at approximately, but not limited to, 760 Kbps. While this speed of data transmission is not favorably compared to present day wire speed, it is equal to or substantially better than the speed achieved by current digital subscriber lines (DSL)or cable modem services. At this speed, the transceiver assembly can handle video or full stereo sound, and can supply high resolution images at a somewhat lower frame rate while simultaneously carrying voice and data streams.

Of course, despite the preceding, it is emphasized that the system and method of the present invention utilizes the term "transceiver assembly", which in the context of the present invention, is meant to include the aforementioned Bluetooth technology or any other transceiver technology utilizing an applicable frequency and/or short range communication standard which may or may not have all of the functional characteristics of Bluetooth. As such, the system and method of communication of the present invention is not meant to be limited to Bluetooth technology, and the subsequent specific description utilization and explanation of certain characteristics previously recited as being characteristic of a Bluetooth transceiver are not intended to be limited to such technology.

Accordingly, the transceiver assembly of the present invention comprises at least one transceiver, preferably in the form of a transceiver chip operative on radio frequencies (RF), wherein such a first transceiver 19 is connected to one or a plurality of network access assemblies, such as a PC or like computer facility generally indicated as 20. The transceiver assembly of the system and method of the present invention also includes at least a second transceiver also in the form of a radio chip connected to or incorporated within each of the plurality of wireless communication devices 10. Each of the wireless communication devices 10 may also include a unique identifier or "code" to facilitate recognition between the first and second transceiver chips 19 and 21. As explained in greater detail hereinafter, the unique identifier may define one of a plurality of predetermined parameters, more specifically referred to as an identification parameter, utilized to establish messaging communication with appropriate ones of a plurality of wireless communication devices 10. When recognized each of the wireless communication devices 10 becomes part of a piconet, generally indicated as 24, which may exist in a home, office, or any other area incorporating one or more Internet access facilities or computers 20. The piconet 24 may be defined by the operative features of the aforementioned transceiver assembly. At least one other predetermined parameter which may be established, based at least in part on the short range frequency standard on which the transceiver assembly operates, is a pre-established vicinity range. More specifically, the pre-established vicinity range may be currently defined as about 100 meters. However, it is emphasized that the actual vicinity range incorporated in the present invention may vary greatly and is not limited to the indicated 100 meters. The pre-established vicinity range therefore allows data communication, over the computerized network, such as the Internet 12, with the wireless communication device 10, by means of the computer 20, provided that the first transceiver 19 associated with the computer 20 and the second transceiver 21 associated with the wireless communication device 10, are compatible or configured to recognize one another. In order to accomplish this identification parameter, the maximum distance between the wireless communication device 10 and the computer 20 must be within the pre-established vicinity range, which of course may vary, as described above.

Each of the plurality of wireless communication devices are multi-line, to the extent that they are capable of operating on at least two, but possibly more, distinct frequencies. Accordingly, once the communication device 10 wanders outside of the pre-established vicinity range of the piconet 24 an auto-switching capability associated with the system and method of the present invention preferably, but not necessarily, automatically establishes communication between the wireless communication device 10 and the over-the-air network 14. As set forth above, the over-the-air network may be defined by appropriate cellular/pager infrastructure, including server 18 or other communication networks such as, but not limited to, satellite communication 17 and others.

The communication system and method of the present invention also incorporates scanner capabilities, which is more specifically incorporated within the aforementioned transceiver assembly. Operative features of the scanner capabilities of the present invention provide for preferably continuous scanning, wherein the first and second transceivers 19 and 21 are continuously searching to establish messaging communication between compatibly configured computers 20 and wireless communication devices 10. The scanning capabilities are completed when, for example, one of the plurality of wireless communication devices 10 wanders within the pre-established vicinity range of the piconet 24 and includes a unique identifier or code which is recognizable by the first transceiver 19 associated with the computer 20. Upon recognition and when all the pre-determined parameters have been met, messaging communication between the computer 20 and the one or more wireless communication devices 10 is established. The communication system and method of the present invention also includes selective configuration capabilities which allows a user to configure his account to regulate data transmission to a particular wireless communication device. Such selective configuration can be accomplished via a particular communication device 10 or alternatively through the website of the Internet service provider 15 and/or the individual servers 16, at least when an Internet type computerized network is utilized.

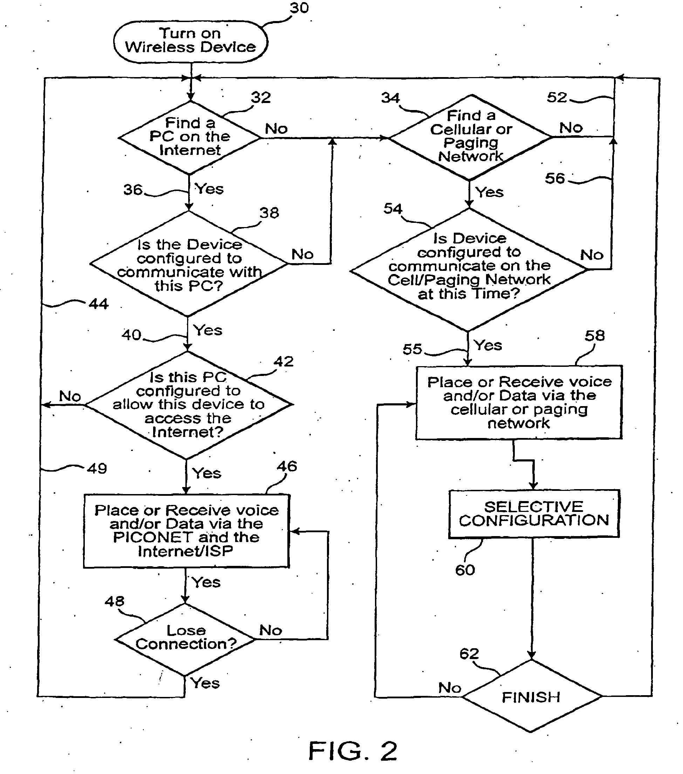

Turning to Figure 2, and by way of example only, a method of operation and utilization of the communication system of the present invention is illustrated. More specifically, in operation anyone of the plurality of wireless communication devices 10 is activated as at 30 and, through operation of the continuous scanning capabilities, as set forth above, a first and second transceiver 19 and 21, associated with the transceiver assembly of the present invention, provide for a "find-me-follow-me" procedure in an attempt to recognize one another and establish messaging communication, as at 32. If the aforementioned pre-determine parameters of identification and vicinity range are not met the auto-switching capabilities of the present invention are automatically operative to find an appropriate, compatible over-the-air network such, as a cellular/paging, satellite or other appropriate network, as at 34. However, assuming that the wireless communication device 10 locates an Internet access facility or computer as at 36, it is next determined, through operative features of the transceiver assembly and combined features of the scanning assembly, whether the computer 20 is configured to recognize and communicate with the wireless communication device 10, as indicated as 38. The configuring of both the computer 20 and the wireless communication device 10 is accomplished by the appropriate programming of the first and second transceivers 19 and 21 defining the aforementioned transceiver assembly. Next, assuming compatible configuration between the computer 20 and the wireless communication device 10 as indicated at 40, it is determined whether the computer 20 is configured to allow the particular wireless communication device 10 to access the Internet 12 as at 42. If the computer 20 is not so configured, then the scan capability is operative to continue searching for a computer which is compatible to the extent of allowing data communication to be established with the particular wireless communication device. However, if no computer can be located, the auto-switching capability is again operative to transfer data communication to an appropriate or compatible over-the-air network 14, as at 44. However, if computer 20 is configured to access the computerized network 12, data communication is thereby established as at 46, wherein voice, video, alphanumeric or other data may be sent or received by virtue of the piconet 24, over the computerized network 12, utilizing the network service provider 15. If the connection is lost as at 48, the auto-switching capability returns to the scanning capabilities as at 49, 44 to continuously search for a compatible Internet access facility or computer 20 or alternatively switches to communication with an over-the-air network, as at 34.

Alternatively, and as explained above, if a predetermined parameter of establishing data communication within the piconet 24, between computer 20 and the wireless communication device 10, is not established, such as by the wireless communication 10 being located outside the pre-established vicinity range, a search is made for a compatible over-the-air network 14, such as, but not limited to a cellular, or paging network infrastructure and/or server 18 or other appropriate over-the-air network, such as satellite communication. If one is not found, as at 52, the auto-switching capabilities, as well as the continuous scanning facility, are re-activated, as at 32 and the procedure begins again. Alternatively, assuming that the wireless communication devices are properly configured to establish communication by means of the over-the-air network 14, the decision as at 54 is made whether current data communication may be established. If not, as at 56, the auto-switching and scanning capabilities of the system are re-activated as set forth above. Assuming that current communication is allowed as at 55 data communication may be conducted, as at 58.

The system and method of the present invention further comprise selective configuration capabilities, as generally set forth above and as indicated as 60 in Figure 2. This means that the receipt of data by means of the over-the-air network 14 or the computerized network 12, through the computer 20 may be pre-configured by the user. More specifically, the user may configure a particular account so as to regulate data communication with the particular wireless communication device 10, in terms of how and when such data may be received on either the computer 20 or the over-the-air network 14. By way of example only, the user 10 may selectively configure the account, utilizing either a particular wireless communication device 10 or alternatively the website of the Internet service provider 15, to establish communication, utilizing the transceiver assembly to only accomplish compatible recognition between specific computers 20 and certain wireless communication devices 10. Alternatively, the user can control or regulate what type of data and/or at what time certain communications can be sent by the over-the-air network 14 or over the Internet 12.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims.

## Claims

1. A hybrid communication system for wireless data communication, said system comprising:
a) a wireless communication device (10) including a unique identifier and capable of conducting data communication through an over-the-air network,
b) a computer facility (20) configured for computerized network access,
c) a transceiver assembly operative on a short range communication standard and structured to interconnect said wireless communication device (10) with the computer facility (20) to establish data communication therewith,
d) said transceiver assembly including a first transceiver (19) connected to said computer facility (20) and at least a second transceiver (21) connected to said wireless communication device (10) and an auto-switching capability responsive to predetermined parameters,
wherein said auto-switching capability is determinative of data communication with said wireless communication device (10) either over the computerized network through said computer facility (20) or by the over-the-air network dependent on the establishment of said predetermined parameters,
at least one of said predetermined parameters comprising a pre-established vicinity range;
said transceiver assembly including selective configuration capability responsive to said first and second transceivers (19, 21) being located within said pre-established vicinity range;
said system being structured to instruct said over-the-air network to regulate transmission of data to said wireless communication device (10);
wherein said over-the-air network is adapted for selectively storing all data for
said wireless communication device (10) and for transmitting data to said wireless communication device (10) within a selectable time window.

2. A system as recited in claim 1 wherein said transceiver assembly is operative on a short range frequency.

3. A system as recited in claim 1 wherein said auto-switching capability automatically establishes data communication with said wireless communication device (10) outside said pre-established vicinity range and automatically establishes communicative recognition between said computer facility (20) and said wireless communication device (10) within said pre-established vicinity range.

4. A system as recited in claim 3 wherein said predetermined parameters further comprise recognition compliance of said wireiess communication device (10) based at least partially on said unique identifier.

5. A system as recited in claim 1 wherein said wireless communication device (10) comprises a pager assembly including multi-line communication capabilities operable on at least two independent frequency ranges.

6. A system as recited in claim 5 wherein said auto-switching capability is responsive to said pre-established vicinity range to automatically establish at least one-way messaging with said over-the-air network when said pager assembly is outside said vicinity range.

7. The system of claim 1, wherein said transceiver assembly includes a scanning capability, said scanning capability being structured to provide continuous searching by at least one of said first or second transceivers (19, 21) for the other of said transceivers (19, 21) and establish communication therebetween when said wireless communication device (10) is within said pre-established vicinity range.

8. The system of claim 1, comprising:
a) a plurality of wireless communication devices each including a unique identifier and capable of establishing messaging communication by an over-the-air network,
b) a plurality of Internet access facilities each capable of recognizing different ones of said wireless communication devices by means of said unique identifiers,
c) a transceiver assembly comprising a plurality of first transceivers each connected to a different one of said Internet access devices and a plurality of second transceivers each connected to a different one of said plurality of wireless communication devices,
d) said transceiver assembly including an auto-switching switching capability responsive to said predetermined parameters,
e) said predetermined parameters comprising acceptance of said unique identifiers and a pre-established vicinity range existing between any one of said wireless communication devices and any one of said plurality of Internet access devices, and
f) said transceiver assembly and said auto-switching capability determinative of data communication with said wireless communication device, either by said over-the-air network or by Internet access, dependent on the establishment of said predetermined parameters.

9. A system as recited in claim 8 wherein said transceiver assembly includes a scanner capability.

10. A system as recited in claim 9 wherein said scanner capability is structured to provide continuous searching by at least one of said first plurality of transceivers or said second plurality of transceivers for the other and establish communication there between, when a corresponding one of said plurality of wireless communication devices is within said pre-established vicinity range of said plurality of Internet access facilities.

11. A system as recited in claim 9 further comprising a configuration facility selectively operative to regulate transmission of data to any one of said plurality of wireless communication devices by means of said over-the-air network.

12. A method of hybrid communication utilizing a multi-frequency wireless communication device (10) and an Internet access facility (20), said method comprising:
a) establishing communication between the Internet access facility (20) and the wireless communication device (10) when both are located within a pre-establish vicinity range,
b) communicating data to the wireless communication device (10) over the Internet through the Internet access facility (20),
c) alternatively establishing data communication with the wireless communication device (10) by a compatible over-the-air network when the Internet access facility (20) and the wireless communication device (10) are disposed outside of the pre-established vicinity range, and
d) automatically switching messaging communication with said wireless communication device (10) between the Internet and the over-the-air network dependent at least on said wireless communication device (10) being inside or outside said pre-established vicinity range relative to the Internet access facility,
e) instructing said over-the-air network to regulate transmission of data to said wireless communication device (10);
wherein said over-the-air network is adapted for selectively storing all data for said wireless communication device (10) and for transmitting data to said wireless communication device (10) within a selectable time window.

13. A method as recited in claim 12 comprising configuring either the wireless communication device (10) or the Internet access facility (20) to selectively regulate time and/or content of messaging data to the wireless communication device (10).

## Patentansprüche

1. Ein hybrides Kommunikationssystem für drahtlose Datenkommunikation, wobei das System Folgendes aufweist:
a) eine drahtlose Kommunikationseinrichtung (10), einschließlich eines einmaligen bzw. eindeutigen Identifizierers und geeignet zum Leiten von Datenkommunikation durch ein Luftschnittstellennetzwerk,
b) eine Computereinheit (20) konfiguriert für einen computerisierten Netzwerkzugang,
c) eine Transceiver-Anordnung betreibbar auf einem Kurzbereich-Kommunikationsstandard und strukturiert zum Verbinden bzw. Koppeln der drahtlosen Kommunikationseinrichtung (10) mit der Computereinheit (20) um damit eine Datenkommunikation herzustellen,
d) die Transceiver-Anordnung einen ersten Transceiver (19), der mit der Computereinheit (20) verbunden ist, und wenigstens einen zweiten Transceiver (21), der mit der drahtlosen Kommunikationseinrichtung (10) und eine automatische Schaltfähigkeit ansprechend auf vorherbestimmte Parameter beinhaltet, wobei die automatische Schaltfähigkeit bestimmend ist für die Datenkommunikation mit der drahtlosen Kommunikationseinrichtung (10) entweder über das computerisierte Netzwerk durch die Computereinrichtung (20) oder durch das Luftschnittstellennetzwerk, abhängig von dem Einrichten von den vorherbestimmten Parametern,
wobei wenigstens einer von den vorherbestimmten Parametern einen zuvor hergestellten Umgebungsbereich aufweist;
die Transceiver-Anordnung selektive Konfigurationsfähigkeit beinhaltet und zwar ansprechend auf die ersten und zweiten Transceiver (19, 21), die innerhalb des zuvor hergestellten Umgebungsbereichs lokalisiert sind;
das System strukturiert ist zum Instruieren des Luftschnittstellennetzwerks zum Regulieren von Datenübertragung an die drahtlose Kommunikationseinrichtung (10);
wobei das Luftschnittstellennetzwerk angepasst ist zum selektiven Speichern aller Daten für die drahtlose Kommunikationseinrichtung (10) und zum Senden der Daten an die drahtlose Kommunikationseinrichtung (10) innerhalb eines wählbaren Zeitfensters.

2. System nach Anspruch 1, wobei die Transceiver-Anordnung auf einer Kurzbereichs-Frequenz betreibbar ist.

3. System nach Anspruch 1, wobei die automatische Schaltfähigkeit automatisch Datenkommunikation mit der drahtlosen Kommunikationseinrichtung (10) außerhalb des zuvor hergestellten Umgebungsbereichs herstellt und automatisch kommunikationsmäßige Erkennung zwischen der Computereinrichtung (20) und der drahtlosen Kommunikationseinrichtung (10) innerhalb des zuvor hergestellten Umgebungsbereichs herstellt.

4. System nach Anspruch 3, wobei die vorbestimmten Parameter ferner Erkennungskonformität von der drahtlosen Kommunikationseinrichtung (10) aufweisen und zwar wenigstens teilweise auf dem eindeutigen Identifizierer basierend.

5. System nach Anspruch 1, wobei die drahtlose Kommunikationseinrichtung (10) eine Pager-Anordnung aufweist, die Mehrfach-Leitungskommunikationsfähigkeiten betreibbar auf wenigstens zwei unabhängigen Frequenzbereichen, beinhaltet.

6. System nach Anspruch 5, wobei die automatische Schaltfähigkeit anspricht auf den zuvor hergestellten Umgebungsbereich, um automatisch wenigstens eine Ein-Weg-Nachrichtenübermittlung mit dem Luftschnittstellennetzwerk herzustellen, wenn die Pager-Anordnung außerhalb des Umgebungsbereichs ist.

7. System nach Anspruch 1, wobei die Transceiver-Anordnung eine Scan- bzw. Abtast-Fähigkeit beinhaltet, wobei die Scan-Fähigkeit strukturiert ist zum Vorsehen von kontinuierlichem Suchen durch wenigstens einen von den ersten oder zweiten Transceivern (19, 21) für den anderen von den Transceivern (19, 21) und zum Herstellen von Kommunikation zwischen ihnen, wenn die drahtlose Kommunikationseinrichtung (10) innerhalb des zuvor hergestellten Umgebungsbereichs ist.

8. System nach Anspruch 1, wobei das System Folgendes aufweist:
a) eine Vielzahl von Kommunikationseinrichtungen, die jeweils einen eindeutigen Identifizierer beinhalten und geeignet sind zum Herstellen von Nachrichtenübermittlungskommunikation durch ein Luftschnittstellennetzwerk,
b) eine Vielzahl von Internetzugangseinrichtungen, die jeweils geeignet sind zum Erkennen von unterschiedlichen drahtlosen Kommunikationseinrichtungen von den drahtlosen Kommunikationseinrichtungen mittels der eindeutigen Identifizierer,
c) eine Transceiver-Anordnung, die eine Vielzahl von ersten Transceivern aufweist, die jeweils mit einem anderen verbunden ist, von den Internet-Zugangseinrichtungen und einer Vielzahl von zweiten Transceivern aufweist, die jeweils verbunden sind mit einem unterschiedlichen drahtlosen Kommunikationseinrichtung von der Vielzahl von drahtlosen Kommunikationseinrichtungen,
d) die Transceiver-Anordnung eine automatische Schaltvermittlungs- bzw. Schaltfähigkeit beinhaltet und zwar ansprechend auf die vorherbestimmten Parameter,
e) die vorherbestimmten Parametern eine Akzeptanz von den eindeutigen Identifizierern aufweisen und ein zuvor hergestellter Umgebungsbereich zwischen irgendeiner von den drahtlosen Kommunikationseinrichtungen und irgendeiner von der Vielzahl von Internet-Zugangseinrichtungen existiert und,
f) die Transceiver-Anordnung und die Auto-Schaltfähigkeit bestimmend sind für Datenkommunikation mit der drahtlosen Kommunikationseinrichtung, entweder durch das Luftschnittstellennetzwerk oder durch Internet-Zugang und zwar abhängig von der Herstellung von den vorherbestimmten Parametern.

9. System nach Anspruch 8, wobei die Transceiver-Anordnung eine Scan-Fähigkeit beinhaltet.

10. System nach Anspruch 9, wobei die Scan-Fähigkeit strukturiert ist zum Vorsehen von kontinuierlichem Suchen durch wenigstens einen von der ersten Vielzahl von Transceivern oder der zweiten Vielzahl von Transceivern für den anderen und zum Herstellen von Kommunikation zwischen ihnen, wenn eine Entsprechende von der Vielzahl von drahtlosen Kommunikationseinrichtungen innerhalb des zuvor hergestellten Umgebungsbereichs von der Vielzahl von Internetzugangseinrichtungen ist.

11. System nach Anspruch 9, das ferner eine Konfigurationseinrichtung aufweist, die selektiv betreibbar ist zum Regulieren von Datenübertragung an irgendeine von der Vielzahl von drahtlosen Kommunikationseinrichtungen mittels des Luftschnittstellennetzwerks.

12. Ein Verfahren zur hybriden Kommunikation unter Verwendung einer drahtlosen Mehrfrequenz-Kommunikationseinrichtung (10) und einer Internet-Zugangseinrichtung (20), wobei das Verfahren Folgendes aufweist:
a) Herstellen bzw. Einrichten von Kommunikation zwischen der Internetzugangseinrichtung (20) und der drahtlosen Kommunikationseinrichtung (10), wenn beide innerhalb eines zuvor hergestellten Umgebungsbereichs angeordnet sind,
b) Kommunizieren von Daten an die drahtlose Kommunikationseinrichtung (10) über das Internet durch die Internetzugangseinrichtung (20),
c) alternativ Herstellen von Datenkommunikation mit der drahtlosen Kommunikationseinrichtung (10) durch ein kompatibles Luftschnittstellennetzwerk, wenn die Internetzugangseinrichtung (20) und die drahtlose Kommunikationseinrichtung (10) außerhalb des zuvor hergestellten Umgebungsbereichs angeordnet sind, und
d) automatisches Schalten bzw. Umschalten von Nachrichtenübermittlungskommunikation mit der drahtlosen Kommunikationseinrichtung (10) zwischen dem Internet und dem Luftschnittstellennetzwerk abhängig wenigstens davon ob die drahtlose Kommunikationseinrichtung (10) innerhalb oder außerhalb des zuvor hergestellten Umgebungsbereichs relativ zu der Internetzugangseinrichtung ist,
e) Instruieren des Luftschnittstellennetzwerks zum Regulieren von Datenübertragung an die drahtlose Kommunikationseinrichtung (10);
wobei das Luftschnittstellennetzwerk angepasst ist zum selektiven Speichern aller Daten für die drahtlose Kommunikationseinrichtung (10) und zum Senden der Daten an die drahtlose Kommunikationseinrichtung (10) innerhalb eines wählbaren Zeitfensters.

13. Verfahren nach Anspruch 12, das Konfigurieren von entweder der drahtlosen Kommunikationseinrichtung (10) oder der Internetzugangseinrichtung (20) aufweist zum selektiven Regulieren von Zeit und/oder Inhalt von Nachrichtenübermittlungsdaten an die drahtlose Kommunikationseinrichtung (10).

## Revendications

1. Système de communication hybride pour des communications de données sans fil, le système comprenant :
a) un dispositif de communication sans fil (10) ayant un identificateur spécifique et pouvant effectuer des communications de données par l'intermédiaire d'un réseau à liaison radio,
b) une installation d'ordinateur (20) agencée pour avoir accès à un réseau d'ordinateurs,
c) un ensemble émetteur-récepteur fonctionnant selon une norme de communication à courte portée et structuré pour interconnecter le dispositif de communication sans fil (10) avec l'installation d'ordinateur (20) pour établir une communication de données,
d) ledit ensemble émetteur-récepteur comprenant un premier émetteur-récepteur (19) connecté à l'installation d'ordinateur (20) et au moins un deuxième émetteur-récepteur (21) connecté au dispositif de communication sans fil (10), et une capacité d'autocommutation agissant en fonction de paramètres prédéterminés,
dans lequel la capacité d'autocommutation détermine le passage des communications de données avec le dispositif de communication sans fil (10) soit par le réseau d'ordinateur par l'intermédiaire de l'installation d'ordinateur (20) soit par le réseau à liaison radio en fonction de l'établissement des paramètres prédéterminés,
au moins un des paramètres prédéterminés comprenant une limite de distance de voisinage préétablie ;
l'ensemble émetteur-récepteur comprenant une capacité de configuration sélective agissant en fonction du fait que les premier et deuxième émetteurs-récepteurs (19, 21) sont situés dans la limite de distance de voisinage préétablie ;
le système étant structuré pour donner instruction au réseau à liaison radio de réguler l'émission de données vers le dispositif de communication sans fil (10) ;
dans lequel le réseau à liaison radio est apte à mémoriser sélectivement toutes les données pour le dispositif de communication sans fil (10) et apte à émettre des données vers le dispositif de communication sans fil (10) dans une fenêtre temporelle sélectionnable.

2. Système selon la revendication 1, dans lequel l'ensemble émetteur-récepteur peut fonctionner sur une fréquence à courte portée.

3. Système selon la revendication 1, dans lequel la capacité d'autocommutation établit automatiquement une communication de données avec le dispositif de communication sans fil (10) au-delà de la limite de distance de voisinage préétablie et établit automatiquement une reconnaissance de communication entre l'installation d'ordinateur (20) et le dispositif de communication sans fil (10) dans la limite de distance de voisinage préétablie.

4. Système selon la revendication 3, dans lequel les paramètres prédéterminés comprennent en outre une reconnaissance de conformité du dispositif de communication sans fil (10) au moins partiellement en fonction de l'identificateur spécifique.

5. Système selon la revendication 1, dans lequel le dispositif de communication sans fil (10) comprend un ensemble de téléavertissement comprenant des capacités de communication à lignes multiples pouvant fonctionner sur au moins deux plages de fréquences indépendantes.

6. Système selon la revendication 5, dans lequel la capacité d'autocommutation agit en fonction de la limite de distance de voisinage préétablie pour établir automatiquement au moins une messagerie monodirectionnelle avec le réseau à liaison radio lorsque l'ensemble de téléavertissement est au-delà de la limite de distance de voisinage.

7. Système selon la revendication 1, dans lequel l'ensemble émetteur-récepteur comprend une capacité d'analyse par balayage, la capacité d'analyse par balayage étant structurée pour assurer une recherche continue, par au moins l'un des premier et deuxième émetteurs-récepteurs (19, 21), de l'autre desdits émetteurs-récepteurs (19, 21), et pour établir une communication entre eux lorsque le dispositif de communication sans fil (10) est dans la limite de distance de voisinage préétablie.

8. Système selon la revendication 1, comprenant :
a) une pluralité de dispositifs de communication sans fil, chacun ayant un identificateur spécifique et pouvant établir une communication de messagerie par un réseau à liaison radio,
b) une pluralité d'installations d'accès à Internet, chacune étant capable de reconnaître différents dispositifs parmi les dispositifs de communication sans fil au moyen des identificateurs spécifiques,
c) un ensemble émetteur-récepteur comprenant une pluralité de premiers émetteurs-récepteurs, chacun étant connecté à un dispositif différent des dispositifs d'accès à Internet et une pluralité de deuxièmes émetteurs-récepteurs, chacun étant connecté à un dispositif différent de ladite pluralité de dispositifs de communication sans fil,
d) l'ensemble émetteur-récepteur comprenant une capacité d'autocommutation agissant en fonction de paramètres prédéterminés,
e) lesdits paramètres prédéterminés comprenant l'acceptation des identificateurs spécifiques et d'une limite de distance de voisinage préétablie existant entre l'un quelconque des dispositifs de communication sans fil et l'un quelconque de la pluralité de dispositifs d'accès à Internet, et
f) ledit ensemble émetteur-récepteur et la capacité d'autocommutation déterminant le passage d'une communication de données avec le dispositif de communication sans fil soit par le réseau à liaison radio soit par un accès Internet, en fonction de l'établissement des paramètres prédéterminés.

9. Système selon la revendication 8, dans lequel l'ensemble émetteur-récepteur comprend une capacité d'analyse par balayage.

10. Système selon la revendication 9, dans lequel la capacité d'analyse par balayage est structurée pour assurer une recherche continue, par au moins l'un de la première pluralité d'émetteurs-récepteurs ou de la deuxième pluralité d'émetteurs-récepteurs, de l'autre émetteur, et pour établir une communication entre eux, lorsque l'un correspondant de la pluralité de dispositifs de communication sans fil est dans la limite de distance de voisinage préétablie de la pluralité d'installations d'accès à Internet.

11. Système selon la revendication 9, comprenant en outre une installation de configuration pouvant fonctionner sélectivement pour réguler l'émission de données vers l'un quelconque de la pluralité de dispositifs de communication sans fil au moyen du réseau à liaison radio.

12. Procédé de communication hybride utilisant un dispositif de communication sans fil (10) à fréquences multiples et une installation d'accès à Internet (20), le procédé comprenant :
a) établir une communication entre l'installation d'accès à Internet (20) et le dispositif de communication sans fil (10) lorsque les deux sont situés dans une limite de distance de voisinage préétablie,
b) transmettre des données vers le dispositif de communication sans fil (10) par Internet par l'intermédiaire de l'installation d'accès à Internet (20),
c) établir en tant que variante une communication de données avec le dispositif de communication sans fil (10) par un réseau à liaison radio compatible lorsque l'installation d'accès à Internet (20) et le dispositif de communication sans fil (10) sont situés au-delà de la limite de distance de voisinage préétablie, et
d) commuter automatiquement la communication de messagerie avec le dispositif de communication sans fil (10) entre le réseau Internet et le réseau à liaison radio en fonction au moins du fait que le dispositif de communication sans fil (10) est à l'intérieur ou à l'extérieur de la limite de distance de voisinage préétablie par rapport à l'installation d'accès à Internet,
e) donner instruction au réseau à liaison radio de réguler l'émission de données vers le dispositif de communcation sans fil (10) ;
dans lequel le réseau à liaison radio est apte à mémoriser sélectivement toutes les données pour le dispositif de communication sans fil (10) et à émettre des données vers le dispositif de communication sans fil (10) dans une fenêtre temporelle sélectionnable.

13. Procédé selon la revendication (12) comprenant la configuration du dispositif de communication sans fil (10) ou de l'installation d'accès à Internet (20) pour réguler sélectivement les caractéristiques temporelles et/ou le contenu de données de messagerie vers le dispositif de communication sans fil (10).
